# EUROPEAN PATENT APPLICATION

(11) **EP 4 446 977 A1**
(43) Date of publication of application: **16.10.2024**
(21) Application number: 23167242.9
(22) Date of filing: 11.04.2023
(51) Int. Cl.: G06T 7/00, G06T 7/73

(54) **PROCESSING A MEDICAL IMAGE**

(71) Applicant: Koninklijke Philips N.V., 5656 AG Eindhoven (NL)
(72) Inventor: AIRSANG, Urmila, Eindhoven (NL); BENDE, Prajwal, Eindhoven (NL); GIRIN, Abhijith, 5656AG Eindhoven (NL); BHOWMICK, Soumabha, Eindhoven (NL); FIRTION, Celine, Eindhoven (NL); OKALY, Vikram, Eindhoven (NL); MISHRA, Chandan, Eindhoven (NL); VAJINEPALLI, Pallavi, Eindhoven (NL)
(74) Representative: Philips Intellectual Property & Standards

(57) **Abstract**

A mechanism for determining the location of a mid-sagittal axis with respect to a medical image depicting a heart. The image is processed to identify a first portion representing a portion of the spine and bounding box that encloses a representation of an inner thorax of the subject. An inner thorax is a portion of the thorax that is contained between the ribcage and the spine or skin, but does not contain any calcified tissue such as bone. The mid-sagittal axis is determined to intersect the portion of the spine and runs perpendicular to a side of the bounding box nearest the portion of the spine.

## Description

### FIELD OF THE INVENTION

The present invention relates to the field of medical images, and in particular to medical images of the heart.

### BACKGROUND OF THE INVENTION

There is an increasing use of medical images to analyze and assess the condition of a subject's heart, particularly fetal hearts. For instance, ultrasound diagnosis for congenital heart disease is a widely adapted technique and is becoming increasingly recommended during antenatal monitoring of woman worldwide.

One important biometry measurement for use in assessing fetal cardiac condition is a cardiac angle (CA), which is the angle between a mid-sagittal line and a cardiac axis of the heart. Conventionally, the cardiac angle has been calculated manually by the clinician reviewing one or more suitable medical images based on their expertise and experience.

There is a desire to improve the accuracy and repeatability (e.g., independent from a clinician) of determining a cardiac angle.

### SUMMARY OF THE INVENTION

The invention is defined by the claims.

According to examples in accordance with an aspect of the invention, there is provided a computer-implemented method for determining the location of a mid-sagittal axis on a medical image providing a 4-chamber view plane of a heart.

The computer-implemented comprises: obtaining the medical image, wherein the medical image contains a representation of the thorax of a subject in the 4-chamber view plane; processing the medical image to identify: a first portion of the image that represents a portion of a spine of the subject; and a bounding box having edges that intersect with the bounds of a second portion of the image that represents an inner thorax of the subject, wherein the inner thorax comprises only soft tissue of the subject contained within a ribcage of the subject.

The computer-implemented method also comprises determining the location of the mid-sagittal axis such that the mid-sagittal axis intersects with the first portion of the image and runs perpendicular to an edge of the bounding box nearest the first portion of the image.

Correct identification of the location of a mid-sagittal axis is useful for deriving a number of different biometric measurements, such as a cardiac angle, but also by itself provides useful information for guiding a clinician to understand the structure of the anatomy represented in the medical image.

The proposed approach makes use of a new concept of an inner thorax in order to identify the mid-sagittal axis. The inner thorax represents those parts of the thorax contained within the rib(cage), not including any bone such as the ribs or the spine. It has been identified that use of the inner thorax allows for more accurate identification of the mid-sagittal axis compared to use of an entire thorax or the ribs themselves. This is particularly advantageous in fetal monitoring environments.

In the contest of the remainder of this description, a bounding box is a rectangle (i.e., an oblong or square).

In some examples, determining the location of the mid-sagittal axis is configured such that the mid-sagittal axis originates at the first portion of the image and extends away from the edge of the bounding box nearest the first portion of the image.

In some examples, determining the location of the mid-sagittal axis is further configured such that the mid-sagittal axis intersects with a centroid of the first portion of the image.

In some examples, processing the medical image comprises using one or more machine-learning methods to process the medical image. In particularly advantageous embodiments, this step may comprise processing the medical image using at least one machine-learning method having a U-net architecture. This form of architecture has been identified as being particularly accurate and effective in identifying representative portions (e.g., contours or bounding boxes) of particular features in images, i.e., performing an image segmentation task. It will be appreciated that other forms of machine-learning algorithms can be used in other embodiments of the invention.

The thorax inner may exclude any calcified tissue, such as bone. In particular, the inner thorax excludes the spine as well as the posterior portion of the ribs; and runs anteriorly to the skin.

The medical image is preferably an ultrasound medical image. However, it is possible to apply the proposed techniques using other forms of medical image, such as a CT image or a magnetic resonance image.

The step of obtaining the medical image may comprises: obtaining a plurality of potential medical images of the subject; and processing the plurality of potential medical images to select one of potential medical images as the medical image.

In some examples, the step of processing the plurality of potential images comprises: processing each potential medical image to determine whether or not the potential medical image represents a 4-chamber view plane; and discarding each potential medical image that are determined to not represent a 4-chamber view plane.

It has been recognized that it would be preferable if the medical image provided a 4-chamber view plane of the heart in order to facilitate accurate determination of the mid-sagittal axis.

The step of processing the plurality of potential images may comprise: processing each potential medical image to determine whether or not the potential medical image contains a representation of an entire thorax of the subject; and discarding each potential medical image that are determined to not contain a representation of the entire thorax of the subject. The accuracy of identifying an inner thorax is significantly reduced if the medical image does not comprise the entire thorax of the subject. By discarding any medical images that do not comprise a representation of the entire thorax, accuracy can thereby be improved.

There is also provided a computer-implemented method for determining a cardiac angle measurement of a subject. The computer-implemented method comprises: determining the location of a mid-sagittal axis on a medical image in a 4-chamber view plane by performing any herein disclosed method; processing the medical image using one or more second machine-learning methods to determine the location of a cardiac axis; and determining the angle between the mid-sagittal axis and the cardiac axis as the cardiac angle measurement.

This embodiment provides a technique for determining a measure of cardiac angle. The proposed approach is accurate and repeatable, allowing for ease of comparison between different measurements of the cardiac angle (e.g., for different points in a medical timeline of a single patient or between different patients). More particularly, this embodiment provides an automated solution for measuring CA, which helps in fast analysis and medical reporting.

Processing the medical image using one or more second machine-learning methods may comprise processing the medical image using at least one second machine-learning method having a U-net architecture.

In some examples, the step of processing the medical image to determine the location of a cardiac axis comprises: processing the medical image using the one or more second machine-learning methods to identify a third portion of the image that represents an interventricular septum of the subject; and fitting a line to the third portion of the image that intersects the mid-sagittal axis to determine the location of the cardiac axis.

The computer-implemented method may further comprise controlling an output interface to provide a visual representation of the determined cardiac angle measurement. This provides a user with additional information about the subject for making a clinician decision or performing a clinical analysis.

There is also proposed a computer program product comprising computer program code means which, when executed on a computing device having a processing system, cause the processing system to perform all of the steps of any herein disclosed method.

There is also proposed a processing system for determining the location of a mid-sagittal axis on a medical image providing a 4-chamber view plane of a heart.

The processing system is configured to: obtain the medical image, wherein the medical image contains a representation of the thorax of a subject in the 4-chamber view plane; process the medical image to identify: a first portion of the image that represents a portion of a spine of the subject; and a bounding box having edges that intersect with the bounds of a second portion of the image that represents an inner thorax of the subject, wherein the inner thorax comprises only soft tissue of the subject contained within a ribcage of the subject; and determine the location of the mid-sagittal axis such that the mid-sagittal axis intersects with the first portion of the image and runs perpendicular to an edge of the bounding box nearest the first portion of the image.

There is also provided an ultrasound system comprising any herein disclosed processing system; an ultrasound probe configured to generate the medical image for obtaining by the processing system; and an output interface configured to provide a visual representation of the mid-sagittal axis and/or a value of a parameter derived from the mid-sagittal axis.

An example of a value of a parameter derived from the mid-sagittal axis is the cardiac angle measurement. Other examples will be apparent to the suitably skilled person in the art.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flowchart illustrating a proposed method;
Fig. 2 illustrates a proposed technique;
Fig. 3 is a flowchart illustrating a proposed step for use in a method;
Fig. 4 is a flowchart illustrating another proposed method;
Fig. 5 illustrates a proposed technique; and
Fig. 6 illustrates a proposed system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for determining the location of a mid-sagittal axis with respect to a medical image depicting a heart. The image is processed to identify a first portion representing a portion of the spine and bounding box that encloses a representation of an inner thorax of the subject. An inner thorax is a portion of the thorax that is contained between the ribcage and the spine or skin, but does not contain any calcified tissue such as bone. The mid-sagittal axis is determined to intersect the portion of the spine and runs perpendicular to a side of the bounding box nearest the portion of the spine.

Embodiments are based on the realization that use of an inner thorax facilitates accurate automated determination of the position of a mid-sagittal axis within a 4-chamber view of the heart.

Proposed approaches can be used in any form of cardiac/heart monitoring, but find particular advantage in fetal heart monitoring. Even more particularly, advantage is identified in ultrasound-based fetal heart monitoring.

For the avoidance of doubt, throughout this document, the adjective "nearest" or "furthest" in the phrase "edge of the bounding box nearest[/furthest]" is associated with the noun "edge" rather than the noun "bounding box". Thus, the phrase "edge of the bounding box nearest[/furthest] the first portion of the image" identifies a specific edge of the bounding box, rather than a particular bounding box.

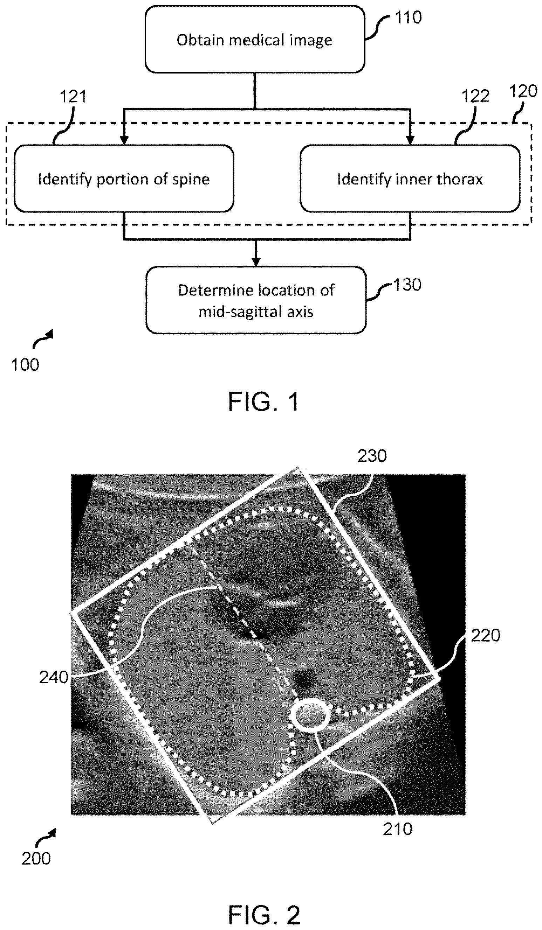

Fig. 1 is a flowchart illustrating a computer-implemented method 100 according to an embodiment. The method 100 is designed for identifying or determining the location of a mid-sagittal axis with respect to a medical image providing a 4-chamber view plane of a heart, preferably a fetal heart.

The method 100 comprises a step 110 of obtaining the medical image. The medical image may, for instance, be obtained (e.g., retrieved) from a memory or storage device or be provided by an image generating device. A detailed example of step 110 is provided later in this disclosure.

The medical image is preferably a non-invasively obtained medical image, such as an ultrasound image, an X-ray or CT image or a magnetic resonance image. An ultrasound image is particularly advantageous, as the production of an ultrasound image is commonly used in antenatal monitoring of a fetus, such that such a medical image is readily available, and provides suitable detail for performing the proposed approach.

The method 100 also comprises a step 120 of processing the medical image to identify a first portion of the image that represents a portion of a spine of the subject; and a bounding box having edges that intersect with the bounds of a second portion of the image that represents an inner thorax of the subject.

The inner thorax comprises only soft tissue of the subject contained within a ribcage of the subject. The inner thorax thereby excludes any calcified tissue, such as bone (e.g., of the spine or the ribcage). More specifically, the inner thorax excludes the spine as well as the posterior portion of the ribs; and runs anteriorly to the skin.

As illustrated, step 120 can be carried out in separate sub-steps.

Thus, step 120 may comprise a first sub-step 121 processing the medical image to identify a first portion of the image that represents a portion of a spine of the subject.

Similarly, step 120 may comprise a second sub-step 122 of processing the medical image to identify a bounding box having edges that intersect with the bounds of a second portion of the image that represents an inner thorax of the subject, wherein the inner thorax comprises only soft tissue of the subject contained within a ribcage.

More particularly, the bounding box may be sized so as to entirely contain the second portion of the image and intersect with edges thereof, i.e., such that none of the second portion of the image is located outside of the bounding box. The bounding box is preferably the smallest sized bounding box that meets these restrictions.

Sub-steps 121 and 122 can be performed simultaneously or separately.

In some examples, one or both of sub-steps 121 and 122 are performed using one or more (appropriately trained) machine-learning methods.

One approach for performing sub-step 122 is to use one or more machine-learning methods to identify a contour that bounds the second portion of the image. A bounding box may then be fit to this contour, e.g., a bounding box that intersects with the edges of the second portion of the image. In particular, the bounding box may be the smallest sized box (i.e., cuboid) that entirely contains the contour that bounds the second portion of the image (representing the inner thorax), i.e., such that none of the contour extends outside of the bounding box. One example technique for determining such a bounding box is the 'minAreaRect' function used in OpenCV. Other examples techniques will be apparent to the skilled person.

Another approach for performing sub-step 122 is to use one or more machine-learning methods that are directly trained to determine the bounding box. This can be achieved through appropriate training of the machine-learning method(s).

Alternatively, the two functions of sub-steps 121 and 122 can be performed using the same one or more machine-learning methods, e.g., using a single dual-purpose machine-learning method.

If used, the one or more machine-learning methods preferably comprises at least one machine-learning method that has a U-net architecture. Such machine-learning methods are particularly suited to a task of performing image segmentation and therefore offer improved identification of the first portion and/or the bounding box.

Alternative approaches (e.g., that do not make use of any machine-learning processes) to perform sub-steps 121 and/or sub-step 122 will be apparent to the skilled person. By way of example, one or more shape models or automated finite element modelling techniques may be used to identify regions or contours that represent the first portion and/or the relevant inner thorax. In particular, any suitable segmentation technique could be used to perform sub-step 121 and/or sub-step 122.

Thus, step 120 may comprise processing the medical image using one or more segmentation techniques and/or algorithms to identify a first portion of the image that represents a portion of a spine of the subject; and a bounding box having edges that intersect with the bounds of a second portion of the image that represents an inner thorax of the subject.

Examples of suitable segmentation techniques are set out, for instance, in Pal, Nikhil R., and Sankar K. Pal. "A review on image segmentation techniques." Pattern recognition 26.9 (1993): 1277-1294; Sharma, Neeraj, and Lalit M. Aggarwal. "Automated medical image segmentation techniques." Journal of medical physics 35.1 (2010): 3; or Ramesh, K. K. D., et al. "A review of medical image segmentation algorithms." EAI Endorsed Transactions on Pervasive Health and Technology 7.27 (2021): e6-e6.

The method 100 also comprises a step 130 of determining the location of the mid-sagittal axis such that the mid-sagittal axis intersects with the first portion of the image and runs perpendicular to an edge of the bounding box nearest the first portion of the image.

In this way, the mid-sagittal axis is positioned to run parallel to two parallel edges of the bounding box that are perpendicular to an edge of the bounding box nearest the first portion of the image. In this way, the mid-sagittal axis may be perpendicular to the edge of the bounding box nearest the first portion and/or furthest from the first portion.

In some examples, step 130 comprises determining the location of the mid-sagittal axis to originate at the first portion of the image and extends away (and perpendicular to) from the edge (of the bounding box) nearest the first portion of the image. In some examples, step 130 comprises terminating the mid-sagittal axis at the edge (of the bounding box) furthest from the first portion of the image.

In this way, the mid-sagittal axis may originate at the first portion of the image and terminate at the edge (of the bounding box) furthest from the first portion of the image. The mid-sagittal axis lies perpendicular to the nearest edge of the bounding box (with respect to the first portion of the image) and therefore lies perpendicular to the furthest edge of the bounding box.

In some examples, determining the location of the mid-sagittal axis is configured such that the mid-sagittal axis intersects with the center point or centroid of the first portion of the image. This provides a simple technique for defining the intersection with the first portion of the image. For instance, the mid-sagittal axis may originate at the center point or centroid of the first portion of the image and extend away from (and perpendicular to) the edge of the bounding box nearest the first portion of the image.

Embodiments are based on the realization that (in a 2D plane) an axis that intersects the spine and extends in a general direction of the inner thorax away from the spine is representative of the mid-sagittal axis. More particularly, use of the inner thorax to perform the calculation avoids any discontinuity or error caused by calcified tissue.

According to medical literature, the mid-sagittal axis or line is the line which divides the representation of the thorax region in an image into two equal halves, i.e., bisects the thorax region. This is a complex task to achieve using purely automated means. The above-proposed technique has been identified as providing superior accuracy in determining the location of the mid-sagittal line.

More particularly, the proposed approach makes use of a herein defined kind of sub-anatomy, namely the inner thorax. This is effectively the part of the thorax that remains after removing any bone structure (e.g., is ribs and spine) and the tissues external to them. Identification or segmentation of the spinal anatomy is used as an anchor or intersection point which identifies point through which the mid-sagittal axis should intersect, e.g., a starting point for the mid-sagittal axis. The line perpendicular to the edge of the rectangle nearest the spinal contour and passing through the (centroid of) the spinal contour is used as the mid-sagittal axis.

The method 100 may further comprise a step (not shown) of controlling an output interface to provide a visual representation of the medical image and/or the mid-sagittal axis. In particular, this step may comprise providing a visual representation of the obtained medical image with a representation of the mid-sagittal axis overlaying the medical image at the relevant location, as determined using the preceding steps of method 100. This provides a clinician with useful information for making a clinical assessment or analysis of the subject.

Fig. 2 illustrates an example image 200 having features identified or determined by the proposed approach conceptually illustrated thereon. Fig. 2 is provided for improved conceptual understanding of the proposed technique.

It is appreciated that any image that provides a 4-chamber view of a heart (of a subject) should include a view of the portion of the subject's spine and a view of the inner thorax of the subject. Thus, it can be assumed that the image 200 contains a representation of the spine and a representation of the inner thorax.

A first contour 210 identifies or bounds the representation of a portion of the spine within the example image. Thus, the first contour 210 contains the first portion of the image that represents the portion of the spine within the example image.

A second contour 220 identifies or bounds the representation of the inner thorax within the example image 200. Thus, the second contour contains the second portion of the image that represents the inner thorax of the subject.

A bounding box 230 is the bounding box having edges that intersect with the bounds of a second portion of the image that represents an inner thorax of the subject. The bounding box 230 is formed in the shape of a square or rectangle (i.e., a cuboid).

A first dashed line 240 represents the mid-sagittal axis of the subject. As illustrated in Fig. 2, the first dashed line 240 (and therefore mid-sagittal axis) is positioned to intersect the first contour (i.e., the first portion of the image) and be perpendicular to a nearest and/or most distant edge of the bounding from the first contour 210 or the first portion of the image.

It has been recognized that not all medical images (e.g., of a fetal heart) are suitable for being processed in order to produce an accurate mid-sagittal axis and/or a measurement derived using the mid-sagittal axis. In particular, it has been recognized that the accuracy of identifying a mid-sagittal axis (and/or measurements derived therefrom) improves if the medical image provides: a suitably accurate 4-chamber view of the heart; a representation of the entire thorax; and/or contains a representation of the relevant or desired anatomies for carrying out the proposed method. For the purposes of determining a mid-sagittal axis, the relevant anatomies include: a portion of the spine (of the subject) and the inner thorax (of the subject).

By way of explanation, if only part of the thorax is contained in the medical image, then the identification of the location mid-sagittal axis is prone to error. The orientation of the mid-sagittal axis is dependent upon on the bounding box positioned in the thorax region. When the thorax is only partial represented, the positioning of the bounding box is likely to go wrong, as there is insufficient data to process in order to identify the location of the bounding box.

In examples in which the medical image is an ultrasound image, the image may contain only a partial representation of the thorax if acquired in a zoomed view or if there is some shadow that blocks the view of thorax, e.g., along its border.

Accordingly, and with reference to Fig. 1, for improved performance it is possible to adapt step 110 to restrict or limit the obtained image to meet one or more of these criteria. In other words, out of a plurality of potential medical images, one may be selected as the medical image.

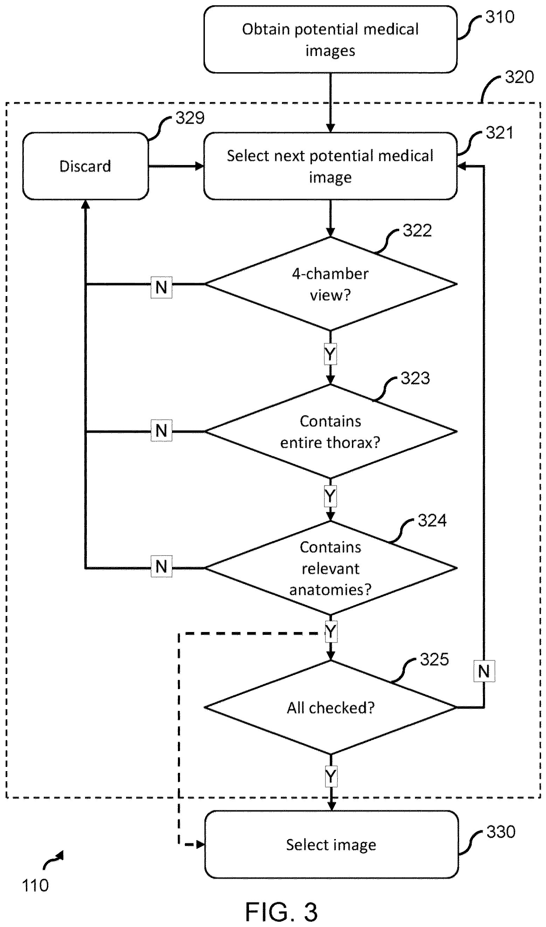

Fig. 3 is a flowchart illustrating an embodiment of a process for selecting one of a plurality of medical images as the medical images, for the purpose of performing step 110.

In this embodiment, step 110 may comprise a step 310 of obtaining a plurality of potential medical images of the subject. The potential medical images may be obtained from a storage unit, memory or medical imaging device (such as an ultrasound machine). In particular, the potential medical images may comprise a sequence of images captured during a medical imaging procedure.

The potential medical images may, for instance, represent different 2D slices of a 3D image of the thorax. In preferred examples, each 2D slice is a slice that is perpendicular to a spine or spine axis of the subject.

The step 110 may then comprise processing 320, 330 the plurality of potential medical images to select one of potential medical images as the medical image. Thus, a single one of the potential medical images can be selected as the medical image.

One approach to performing such a processing procedure comprises an iterative process 320 that acts to discard any medical images (of the plurality of potential images) that does not meet the criteria.

For instance, the iterative process 320 may act to process each potential medical image to determine whether or not the potential medical image represents a 4-chamber view plane; and discard each potential medical image that are determined to not represent a 4-chamber view plane.

In some examples, the process 320 may act to process each potential medical image to determine whether or not the potential medical image contains a representation of an entire thorax of the subject; and discarding each potential medical image that are determined to not contain a representation of the entire thorax of the subject.

In some examples, the process 320 may act to process each potential medical image to determine whether or not the potential medical image contains a representation of the desired anatomies of the subject; and discarding each potential medical image that are determined to not contain a representation of the desired anatomies. For the purposes of determining a mid-sagittal axis, the relevant anatomies include: a portion of the spine (of the subject) and the inner thorax (of the subject.

One example technique for performing process 320 is hereafter described.

The process comprises a step 321 of selecting a next potential image from the plurality of potential images, e.g., in the series or sequence of potential images.

The process then moves to a step 322 of determining whether or not the selected potential image provides a 4-chamber view of a (fetal) heart. Approaches for performing such a step are known in the art, e.g., as disclosed by the International Patent Application having publication No. WO 2022/243178 A1; Sundaresan, Vaanathi, et al. "Automated characterization of the fetal heart in ultrasound images using fully convolutional neural networks." 2017 IEEE 14th international symposium on biomedical imaging (ISBI 2017). IEEE, 2017; or Park, Jin Hyeong, et al. "Automatic cardiac view classification of echocardiogram." 2007 IEEE 11th international conference on computer vision. IEEE, 2007.

Responsive to determining, in step 322, that the potential medical image does not provide a 4-chamber view of the heart, the potential medical image is discarded in step 329 and the next potential medical image is selected in step 321. Otherwise, the method continues.

The process then moves to a step 323 of determining whether or not the selected potential image contains a representation of an entire thorax of the subject.

In a simple example, step 323 may be performed using an appropriately trained machine-learning method.

In a more detailed example, to detect the presence or absence of an entire thorax within a potential medical image, a hereafter described 3-step algorithm could be used, which is based on simple image processing techniques. The hereafter described algorithm is designed specifically for use with ultrasound images, which is one example of a medical image that may be used in some embodiments, but can equally apply to other forms of medical image.

Firstly, a fanbeam contour is detected. A fanbeam represents the boundaries of the entire anatomical region represented in the medical image. It will be apparent that part of a conventional ultrasound image will contain a sector containing a representation of the imaged anatomical region. Areas outside of this sector may contain other information (e.g., anatomical information, subject data and/or annotations).

One approach for detecting a fanbeam contour is to first detect all closed contours within the ultrasound image. A closed contour is a contour that only encloses non-zero or intensity values within the ultrasound image, and is a well-known term in the art. One example of a suitable function is the 'findContours' used in OpenCV. Subsequently, on the largest identified contour, a convex hull can be fitted. The convex hull represents the fanbeam boundaries, i.e., acts as the fanbeam contour.

An inner thorax contour is determined. An inner thorax contour is a contour that encloses or bounds (or is predicted to enclose or bound) a representation of the inner thorax within the medical image. The inner thorax contour may be determined by processing the potential medical image with a suitably trained machine-learning algorithm, such as a trained U-net neural network. Thus, image segmentation may be performed on the potential medical image to identify the neural network.

Subsequently, it is determined whether or not there are any intersections between the fanbeam contour and the inner thorax contour. The occurrence of an intersection indicates that the potential medical image does not contain a representation of an entire thorax. Thus, the absence of an intersection indicates that the potential image contains a representation of the entire thorax.

For increased robustness to false positives (i.e., incorrect identification that the potential medical image contains a representation of an entire thorax), before determining any intersections between the fanbeam contour and the inner thorax contour: the fanbeam contour may be reduced or scaled down in size (e.g.,); or the inner thorax contour may be increased or scaled up in size (e.g., upscaled); or both. By way of example only, the inner thorax contour may be dilated with a kernal size of 10. This effectively means that the size of the inner thorax contour is increased by a portion that goes around the contour with a thickness of 5 pixels. This smoothens the inner thorax contour boundary and ensures that the entirety of the inner thorax is considered for analysis (i.e., increase the likelihood that the inner thorax contour contains the entire inner thorax). As another example, the fanbeam contour may be scaled down by a first predetermined percentage or the inner thorax contour may be scaled up by a second predetermined percentage or both. The first and/or second predetermined percentage may each by a value between 5% and 20%, e.g., between 5% and 10%.

If it is determined, in step 323, that the selected potential image does not contains a representation of an entire thorax of the subject, the selected potential image may be discarded in a step 329 and a new potential image selected in step 321. Otherwise, the process 320 continues.

The process then moves to a step 324 of determining whether or not the selected potential image contains a representation of the relevant anatomies upon which later processing relies. For instance, in the present examples in which a mid-sagittal axis is identified, step 324 may comprise determining whether or not the potential image contains a representation of a portion of the spine and/or the inner thorax.

In a simple example, step 324 may be performed using one or more appropriately trained machine-learning method. For instance, one or more classification algorithms may process the medical image to predict whether or not said medical image contains a representation of a particular object. Example classification algorithms are well known in the art and include any suitably trained machine learning network.

If it is determined, in step 324, that the selected potential image does not contains a representation of each of the relevant anatomies, the selected potential image may be discarded in a step 329 and a new potential image selected in step 321. Otherwise, the process 320 continues.

Of course, any of steps 322, 323, 324 may be omitted in some embodiments, e.g., where it is known in advance that the potential medical images will meet the requirements for said step. It will also be appreciated that steps 323, 323, 324 can be performed in any order, or may even be combined.

In some examples, the method then performs a checking step 325 of checking whether all medical images have been processed. Responsive to all medical images having been processed, the method may then move to a step 330 of selecting one of the remaining potential medical images as the medical image. Otherwise, the method may revert back to step 321.

Alternatively, the method may move directly to step 330 without performing step 325, i.e., so that the first medical image that is identified as meeting the relevant criteria is selected as the medical image to be processed.

If step 325 is performed, then step 330 may comprise performing a random or pseudorandom selection of one of the potential medical images as the medical image to be processed. Approaches for performing such a random or pseudorandom selection of one or more options are well established in the art. Alternatively, step 330 may select one or more of the medical images based on one or more properties of the medical image(s), e.g., average contrast or average intensity.

In some examples, if step 325 is performed, step 330 may comprise performing a quality analysis of all the remaining potential medical images and subsequently selected the potential medical image with the best quality assessment value for later processing. Approaches for determining a quality value for an image are well known in the art, such as disclosed by the US Patent Applications having publication No. US 2023/068399 A1, the International Patent Application having publication No. WO 2022/096471 A1 or the European Patent Application having publication No. EP 4,080,449 A1.

Of course, if no potential images remain after performing process 320, then the method may end. Alternatively, the entire process 320 with the originally obtained potential images may be repeated, but without performing one of steps 322, 323, 324 (if present). For instance, step 323 may be omitted.

In some examples, if no potential images remain after performing process 320, then a user-perceptible alert may be generated, e.g., at a user interface.

In some examples, if no potential images remain after performing process 320 then one of the potential images may be nonetheless selected and further processed (i.e., with reference to Fig. 1, step 120 may be performed on the potential image).

In such examples, rather than determining a location of the mid-sagittal axis (i.e., performing step 130), a user-adjustable representation of the mid-sagittal axis may be provided at a user interface overlaying a display of the selected one of the potential medical images. The user may then be able to manipulate the relative position of the mid-sagittal line by interacting with the representation thereof to define the location of the mid-sagittal axis. The initial positioning of the representation may be such that it lies at a center of the inner thorax, to reduce a burden on the user in moving or manipulating the representation.

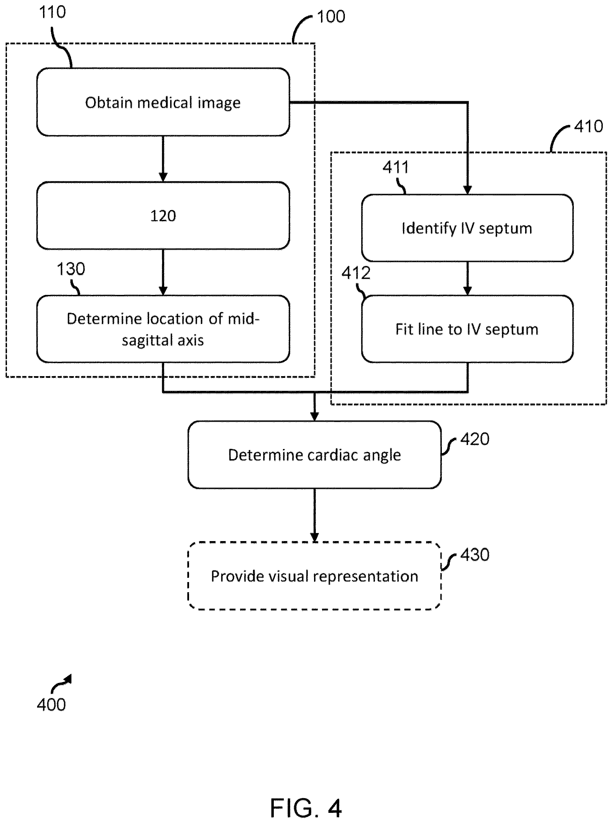

Fig. 4 illustrates a computer-implemented method 400 for determining a cardiac angle measurement of a subject that makes use of the previously described method 100 for determining the location of a mid-sagittal axis.

The computer-implemented method comprises performing a process 410 of processing the medical image (obtained in step 110 of method 100) using one or more second machine-learning methods to determine the location of a cardiac axis. The cardiac axis is an axis that extends in a direction of a representation of the interventricular (IV) septum of the subject in the medical image. An alternative label for the cardiac axis is the cardiac line.

The computer-implemented method then performs a step 420 of determining the angle between the mid-sagittal axis and the cardiac axis as the cardiac angle measurement.

In a simple example, process 410 comprises processing the medical image to directly predict the cardiac axis using a suitable trained machine-learning algorithm. An example of a suitably machine-learning algorithm is a machine-learning algorithm having a U-net architecture.

In a preferred example, process 410 comprises a step 411 of processing the medical image using the one or more second machine-learning methods to identify a third portion of the image that represents an interventricular (IV) septum of the subject.

Thus, step 411 may comprise performing a segmentation process on the medical image to identify, as a segmentation result such as a contour or bounding box, a portion that contains or bounds the representation of an IV septum of the subject. Thus, the third portion is demarked or bounded by a segmentation result. This process may be performed by a suitably trained second machine-learning method or algorithm.

Process 410 then performs a step 412 of fitting a line to the third portion of the image that intersects the mid-sagittal axis to determine the location of the cardiac axis. Procedures for fitting a line to a segmentation result (i.e., contour or bounding box) are established in the art, and generally act to identify the position of a line that intersects the segmentation result (demarking the third portion of the image) whilst retaining a maximum average distance (for all points along the line) from the bounds of the segmentation result. One function that is suitable for performing step 412 is the 'fitline' function used in OpenCV. Generally, such functions may act as a "line of best fit", and are well established in the field of image processing.

Step 420 can be trivially performed by determining or measuring a smallest angle between the mid-sagittal axis and the cardiac axis. Put another way, after computing both axes (or lines), the deviation or angle between the two axes in degrees or radians is the cardiac angle measurement.

The method 400 may further comprise a step 430 of controlling an output interface to provide a visual representation of the determined cardiac angle measurement. This provides a clinician with useful information for making a clinical assessment or analysis of the subject.

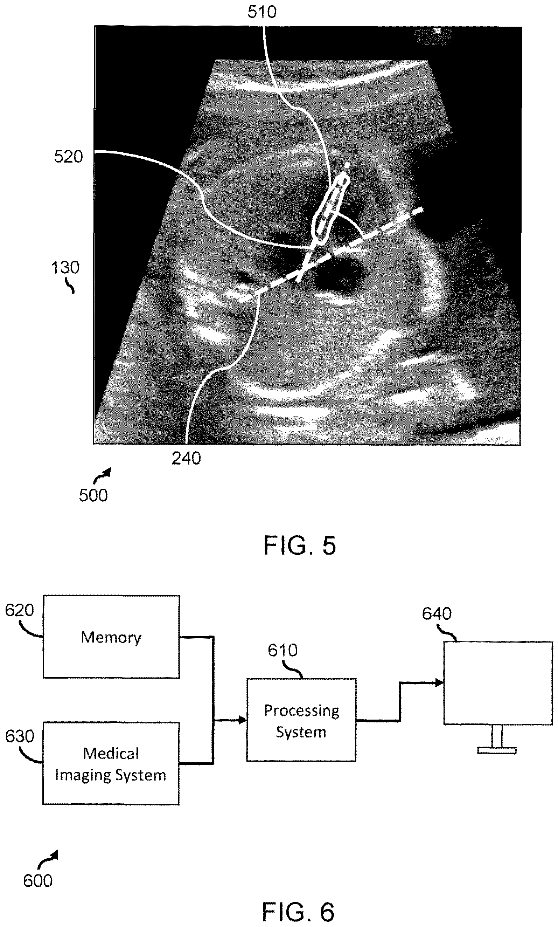

Fig. 5 illustrates an example image 500 having features identified or determined by a proposed technique for identifying the location of the cardiac axis. Fig. 2 is provided for improved conceptual understanding of the proposed technique.

It is appreciated that any image that provides a 4-chamber view of a heart (of a subject) should include a view of the IV septum of the subject. Thus, it can be assumed that the image 500 contains a representation of IV septum of the subject.

The first dashed line 240 that represents the mid-sagittal axis of the subject is again illustrated, for improved contextual understanding.

A third contour 510 identifies or bounds the representation of the IV septum within the example image. Thus, the third contour 510 contains the third portion of the image that represents the IV septum within the example image.

A second dashed line 520 represents the cardiac axis of the subject, and represents a line that has been fit to the third portion of the image.

The angle θ between the first dashed line 240 and the second dashed line is used as the cardiac measurement.

A first dashed line 240 represents the mid-sagittal axis of the subject. As illustrated in Fig. 2, the first dashed line 240 (and therefore mid-sagittal axis) is positioned to intersect the first contour (i.e., the first portion of the image) and lie perpendicular to an edge of the bounding box nearest the first contour 210 or the first portion of the image.

Turning back to Fig. 3, it has previously been explained how for improved performance it is possible to adapt step 110 to restrict or limit the obtained image to meet one or more criteria that achieve improved accuracy in identifying a mid-sagittal axis. The same principle holds true for improved accuracy in identifying the cardiac axis. Thus, it would be advantageous if the obtained image also met criteria for the cardiac axis.

In particular, it has been recognized that the accuracy of identifying a cardiac axis (and/or measurements derived therefrom) improves if the medical image provides: a suitably accurate 4-chamber view of the heart; a representation of the entire thorax; and/or contains a representation of the relevant or desired anatomies for carrying out the proposed method. For the purposes of determining a cardiac axis, the relevant anatomies include the IV septum of the subject.

Thus, step 324 may be appropriately adapted to check whether or not the potential medical image contains a suitable representation of the IV septum of the subject.

More particularly, if a segmentation of the IV septum is used to determine the cardiac axis, then the accuracy of computing the position of the cardiac axis is dependent on the accuracy of the segmentation result (i.e., identification of the third portion of the medical image) that bounds a representation of the IV septum (i.e., with reference to Fig. 4, the accuracy of step 411). If image quality is poor, then the visibility of the IV septum in the image is poor, resulting in inaccurate or wrong identification of the third portion of the image (i.e., inaccurate segmentation). This leads to inaccurate computation of the position of the cardiac axis.

One approach for checking whether or not a potential medical image contains a suitable representation of the IV septum of the subject is hereafter described.

Firstly, the medical image is processed (e.g., using one or more segmentation techniques such as a machine-learning method) to identify a heart contour, being a contour or segmentation result that bounds a portion of the medical image representing a heart of the subject. The heart contour is configured to be in the shape of an ellipse.

It is then checked whether the heart contour is sufficiently eccentric, e.g., if measure of eccentricity of the heart contour breaches some predetermined value.

In one example, the measure of eccentricity is determined by dividing the length of the minor axis of the heart contour by the length of the major axis - such that a lower measure of eccentricity indicates a more eccentric shape. Thus, determining whether the measure of eccentricity of the heart contour breaches some predetermined value may comprise determining whether the measure of eccentricity is less than a predetermined value, e.g., less than 0.7.

Other approaches for determining efficiency may, by contrast, indicate increasing eccentricity for increasing measures of eccentricity - and methods can be modified accordingly (as would be well known to the skilled person).

If it is determined that the heart contour is sufficiently eccentric (e.g., the measure of eccentricity breaches some predetermined value), then it is determined whether or not the angle between the major axis of the ellipse (which acts as a heart axis) and a determined cardiac axis (e.g., calculated using the step 410 previously described) is less than a predetermined angle, e.g., less than 40° or less than 30°. The example values for the angles given in this context are merely exemplary, and the skilled person would be readily capable of modifying any such values for use in different use-case scenarios.

Responsive to the determined angle being less than the predetermined angle, then the potential medical image is considered to contain a suitable representation of the IV septum of the subject. Of course, this means that step 410 does not need to be repeated in later processing of the medical image, to avoid redundant processing.

Responsive to the determined angle being more than the predetermined angle, then the potential image is considered to not contain a suitable representation of the IV septum of the subject. The potential medical image can therefore be discarded. Alternatively, the potential medical image may undergo further processing, e.g., undergo another approach for checking suitability, as outlined below.

If the heart contour is not sufficiently elliptical (e.g., the measure of eccentricity does not breach the predetermined value), then the heart axis should be determined in another way. To do this, segmentation is performed on the medical image to identify the location of each chamber of the heart: right atrium (RA), left atrium (LA), left ventricle (LV) and right ventricle (RV).

Procedures for performing such segmentation are well known in the art, such as techniques noted by Arafati, Arghavan, et al. "Multi-label 4-chamber segmentation of echocardiograms using Fully Convolutional Network." (2018) or Cao, Yu, Patrick McNeillie, and Tanveer Syeda-Mahmood. "Segmentation of anatomical structures in four-chamber view echocardiogram images." 2014 22nd International conference on pattern recognition. IEEE, 2014.

It is then possible to define a plurality of potential heart axes, Each potential heart axis man axis or line that is parallel with a line that intersects with: the LA and the LV or the RA and the RV or an axis or line that is perpendicular to a line that intersects with the LA and the RA or the LV and the RV.

It is then determined whether or not the angle between any potential heart axis and a determined cardiac axis (e.g., calculated using the step 410 previously described) is less than a predetermined angle, e.g., less than 40° or less than 30°. The example values for the angles given in this context are merely exemplary, and the skilled person would be readily capable of modifying any such values for use in different use-case scenarios.

Responsive to any of these angles (between a potential heart axis and the determined cardiac axis) being less than the predetermined angle, then the potential medical image is considered to contain a suitable representation of the IV septum of the subject. Of course, this means that step 410 does not need to be repeated in later processing of the medical image, to avoid redundant processing.

Responsive to any of these angles (between a potential heart axis and the determined cardiac axis) being more than the predetermined angle, then the potential image is considered to not contain a suitable representation of the IV septum of the subject.

The potential medical image may therefore, in some examples, be discarded. Alternatively, the potential medical image may undergo further processing, e.g., undergo another approach for checking suitability, as outlined below.

Another approach for checking whether or not a potential medical image contains a suitable representation of the IV septum of the subject is hereafter described. This approach can be performed independently of the previously described approach or, as mentioned, if a the previous approach fails.

It has been recognized that, for accurate segmentation, the mitral value (MV) and the tricuspid valve (TV) should be aligned or near-aligned with one another. Each of these valves defines a valve axis along which the valve lies. Blood flow is generally perpendicular to the valve axis. The cardiac axis should be perpendicular or near perpendicular to the valve axis of both of these valves. It is determined whether or not these criteria are met.

Thus, it can be determined whether or not the angle between the MV and the TV is less than a first predetermined angle (e.g., less than 45° or less than 30°), and whether the angle between the MV and the cardiac axis is more than a second predetermined angle (e.g., between 60° and 135° or between 70° and 90°) and whether the angle between the TV and the cardiac axis is more than the second predetermined angle (e.g., between 60° and 135° or between 70° and 90°). The example values for the angles given in this context are merely exemplary, and the skilled person would be readily capable of modifying any such values for use in different use-case scenarios.

In response to these criteria being met, it can be determined that the potential medical image is suitable for use in identifying the location of the cardiac axis, i.e., should not be discarded for this reason alone.

In examples that make use of the method of obtaining a medical image as set out in Fig. 3, if no potential medical image is identified - but one is continued to be processed anyway - rather than determining a location of the mid-sagittal axis (i.e., performing step 130) and/or the cardiac axis (i.e., performing step 410), a user-adjustable representation of the mid-sagittal axis and/or cardiac axis may be provided at a user interface overlaying a display of the medical image. The user may then be able to manipulate the relative position of the mid-sagittal line and/or cardiac axis by interacting with the representation thereof to define the location of the mid-sagittal axis and/or cardiac axis. The initial positioning of each representation may be such that it lies at a center of the inner thorax, to reduce a burden on the user in moving or manipulating the representation.

In the previously described embodiment of Fig. 3, process 320 is performed on each of a plurality of potential medical images in order to identify a medical image to be processed. However, the principles of process 320 could instead be applied to a single image, e.g., a user-identified image, to accept or reject the single image for subsequent processing.

In other words, there is proposed a method of obtaining a medical image that comprises receiving a single potential medical image and performing steps 322, 323 and/or step 324 to determine whether or not to accept or discard the single potential image. This single potential image may be a medical image identified by a user or clinician.

Of course, in yet further examples, if it is determined that the single potential image should be discarded, then it is possible to still perform the proposed approach using said potential image, but this is preferably accompanied with a user-perceptible indicator (e.g., a visual warning or other form of indicator) that any results may be inaccurate. The user-perceptible indicator may indicate a reason for the failure of the single potential image, e.g., that it does not provide a 4-chamber view.

In such examples, rather than determining a location of the mid-sagittal axis (i.e., performing step 130) and/or the cardiac axis (i.e., performing step 410), a user-adjustable representation of the mid-sagittal axis and/or cardiac axis may be provided at a user interface overlaying a display of the medical image. The user may then be able to manipulate the relative position of the mid-sagittal line and/or cardiac axis by interacting with the representation thereof to define the location of the mid-sagittal axis and/or cardiac axis. The initial positioning of each representation may be such that it lies at a center of the inner thorax, to reduce a burden on the user in moving or manipulating the representation.

In some examples, if it is determined that the single potential image should be discarded, then a user-perceptible alert may be generated, e.g., at a user interface.

In all above described methods, a step of obtaining a medical image is performed. As previously mentioned, the medical image provides a 4-chamber view plane of a heart. Thus, the medical image may be a 2D medical image or a 2D slice of a 3D medical image (in order to provide the 4-chamber view plane).

In one example, obtaining a medical image comprises extracting a 2D plane from a 3D image of the thorax. This can be performed, for instance, using the following procedure: identify the spine axis using a spine triangle/body detection technique; slice the 3D image into a plurality of 2D planes perpendicular to the spine axis; and process the plurality of 2D planes to select one of the 2D planes that provides a 4-chamber view as the medical image.

This approach can be seen as a variation of the method 110 illustrated in Fig. 3. In particular, the step 310 in the method 110 illustrated by Fig. 3 may comprise: obtaining a 3D image of the thorax; identifying the location of the spine axis within the 3D image; and extracting a plurality of 2D slices of the 3D image (which thereafter act as the potential medical images). Process 320 can then be performed to identify a 2D image that meets desired requirements.

Proposed embodiments may make use of one or more machine-learning algorithms in order to perform a task on an image, such as a segmentation task, classification task or axis positioning task.

A machine-learning algorithm is any self-training algorithm that processes input data in order to produce or predict output data. In the context of the present disclosure, the input data comprises a medical image and the output data comprises the result of a task performed on the medical image (e.g., segmentation results, classification results and so on).

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g., ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

For use in performing segmentation tasks, a particularly advantageous form of machine-learning method is a neural network having a U-net architecture. An overview of the U-net architecture and its applicability to medical image segmentation is provided by Siddique, Nahian, et al. "U-net and its variants for medical image segmentation: A review of theory and applications." IEEE Access 9 (2021): 82031-82057. The skilled person would be readily capable of using this document, or documents cited therein, in order to realize a machine-learning algorithm capable of performing a segmentation task.

However, the performance of a segmentation task is not restricted to only machine-learning methods with a U-net architecture. Other suitable examples of segmentation techniques that could be used are described by Seo, Hyunseok, et al. "Machine learning techniques for biomedical image segmentation: an overview of technical aspects and introduction to state-of-art applications." Medical physics 47.5 (2020): e148-e167.

Tchito Tchapga, Christian, et al. "Biomedical image classification in a big data architecture using machine learning algorithms." Journal of Healthcare Engineering 2021 (2021): 1-11 describes a variety of approaches for performing a classification task using different machine-learning methods. The skilled person would be capable of employing any such mechanisms in embodiments where appropriate.

Fig. 6 illustrates a system 600 according to an embodiment. The system comprises a processing system 610, which is itself an embodiment of the invention.

The processing system 610 is configured to carry out any herein described method. Thus, each step of the flow chart may represent a different action performed by a processing system, and may be performed by a respective module of the processing system.

The system 600 may also comprise a memory 620 and/or medical imaging system 630. The memory 620 and/or medical imaging system 630 are configured to produce the medical image(s) that is/are obtained by the processing system 610. Thus, the processing system may obtain the medical image(s) or, where relevant, the potential medical images from the memory and/or the medical imaging system.

The system 600 also comprises an output interface 640, such as a display or screen. The processing system 610 may be configured to control the operation of the output interface 640 in order to control a visual representation of information provided to a clinician or other user. The visual representation may include, where relevant, a visual representation of: the medical image, the mid-sagittal axis, the cardiac axis and/or the cardiac angle measurement, depending upon the embodiment. Techniques for controlling a visual representation provided at a display or screen are well-established in the art.

In one example, the system 600 is an ultrasound system comprising at least the processing system 610, the medical imaging system 630 embodied as an ultrasound probe and the output interface 640. The ultrasound probe produces the medical image, in the form of an ultrasound image, for processing by the processing system. Thus, the image obtained by the processing system 610 is an ultrasound image generated by the ultrasound probe.

Examples of suitable ultrasound probes for generating a medical ultrasound image are well established in the art. Techniques for obtaining a 4-chamber view of the heart using an ultrasound probe are similarly well established and known.

The processing system 610 can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods.

As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores or carries a computer program or computer code that, when executed by a processing system, causes the processing system to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Ordinal numbers (e.g., "first", "second" and so on) have been used purely to distinguish different elements from one another for the sake of clarity, and reference to a non- "first" (e.g. "second" or "third") element does not necessitate that a "first" element be present. The skilled person would be capable of relabeling any such elements as appropriate (e.g. relabeling a "second" element as a "first" element if only the second element is present).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage.

If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method (100) for determining the location of a mid-sagittal axis (240) on a medical image (200) providing a 4-chamber view plane of a heart, the computer-implemented comprising:
obtaining (110) the medical image (200), wherein the medical image contains a representation of the thorax of a subject in the 4-chamber view plane;
processing (120) the medical image to identify:
a first portion of the image (210) that represents a portion of a spine of the subject; and
a bounding box (230) having edges that intersect with the bounds of a second portion of the image (220) that represents an inner thorax of the subject, wherein the inner thorax comprises only soft tissue of the subject contained within a ribcage of the subject; and
determining (130) the location of the mid-sagittal axis such that the mid-sagittal axis intersects with the first portion of the image and runs perpendicular to an edge of the bounding box nearest the first portion of the image.

2. The computer-implemented method of claim 1, wherein determining the location of the mid-sagittal axis (240) is configured such that the mid-sagittal axis originates at the first portion of the image (210) and extends away from the edge of the bounding box (230) nearest the first portion of the image.

3. The computer-implemented method of claim 1 or 2, wherein determining the location of the mid-sagittal axis is further configured such that the mid-sagittal axis intersects with a centroid of the first portion of the image.

4. The computer-implemented method of any of claims 1 to 3, wherein processing the medical image comprises processing the medical image using one or more machine-learning methods.

5. The computer-implemented method of any of claims 1 to 4, wherein the inner thorax excludes any calcified tissue, such as bone.

6. The computer-implemented method of any of claims 1 to 5, wherein the medical image is an ultrasound medical image.

7. The computer-implemented method (100) of any of claims 1 to 6, wherein the step (110) of obtaining the medical image comprises:
obtaining (310) a plurality of potential medical images of the subject; and
processing (320) the plurality of potential medical images to select one of potential medical images as the medical image.

8. The computer-implemented method of claim 7, wherein the step of processing the plurality of potential images comprises:
processing (322) each potential medical image to determine whether or not the potential medical image represents a 4-chamber view plane; and
discarding (329) each potential medical image that are determined to not represent a 4-chamber view plane.

9. The computer-implemented method of claim 7 or 8, wherein the step of processing the plurality of potential images comprises:
processing (323) each potential medical image to determine whether or not the potential medical image contains a representation of an entire thorax of the subject; and
discarding (329)each potential medical image that are determined to not contain a representation of the entire thorax of the subject.

10. The computer-implemented method of any of claims 1 to 9, wherein the medical image provides a 4-chamber view plane of a fetal heart and contains a representation of the thorax of a fetal subject in the 4-chamber view plane.

11. A computer-implemented method (400) for determining a cardiac angle measurement of a subject, the computer-implemented method comprising:
determining (100) the location of a mid-sagittal axis on a medical image (200) in a 4-chamber view plane by performing the method of any of claims 1 to 10;
processing (410) the medical image using one or more second machine-learning methods to determine the location of a cardiac axis; and
determining (420) the angle between the mid-sagittal axis and the cardiac axis as the cardiac angle measurement.

12. The computer-implemented method of any of claims 1 to 11, wherein the bounding box is a rectangle.

13. A computer program product comprising computer program code means which, when executed on a computing device having a processing system, cause the processing system to perform all of the steps of the method according to any of claims 1 to 12.

14. A processing system (610) for determining the location of a mid-sagittal axis (240) on a medical image (200) providing a 4-chamber view plane of a heart, the processing system being configured to:
obtain (110) the medical image, wherein the medical image contains a representation of the thorax of a subject in the 4-chamber view plane;
process (120) the medical image to identify:
a first portion of the image (210) that represents a portion of a spine of the subject; and
a bounding box (230) having edges that intersect with the bounds of a second portion of the image (220) that represents an inner thorax of the subject, wherein the inner thorax comprises only soft tissue of the subject contained within a ribcage of the subject; and
determine (130) the location of the mid-sagittal axis such that the mid-sagittal axis intersects with the first portion of the image and runs perpendicular to an edge of the bounding box nearest the first portion of the image.

15. An ultrasound system (600) comprising:
the processing system (610) of claim 14;
an ultrasound probe (630) configured to generate the medical image for obtaining by the processing system; and
an output interface (640) configured to provide a visual representation of the mid-sagittal axis and/or a value of a parameter derived from the mid-sagittal axis.
